# FASCICULE DE BREVET EUROPEEN

(11) **EP 1 914 464 B1**
(45) Date de publication et mention de la délivrance du brevet: **19.08.2009**
(21) Numéro de dépôt: 07117810.7
(22) Date de dépôt: 03.10.2007
(51) Int. Cl.: F16L 39/02, F16L 33/28

(54) **Système de détrompage pour le raccordement de canalisations sur un dispositif de commande de fluide**
Kernmarkierungssystem zum Anschluss von Leitungen an eine Flüssigkeitssteuervorrichtung
Foolproofing system for connecting pipes on a liquid control device

(30) Priorité: 20.10.2006 FR 0654400
(43) Date de publication de la demande: 23.04.2008
(73) Titulaire: Peugeot Citroën Automobiles SA, 78140 Vélizy-Villacoublay (FR)
(72) Inventeur: Pitaud, Bernard, 37170 Chambray-les-Tours (FR); Coste, Laurent, 95120 Ermont (FR)
(74) Mandataire: Ménès, Catherine

(56) Documents cités:
- EP-A2- 0 823 248
- BE-A- 651 108
- US-A1- 2003 146 619

## Description

La présente invention concerne un système de détrompage pour le raccordement de canalisations sur un dispositif de commande de fluide, en particulier sur un dispositif de réglage de débit de fluide tel qu'une électrovanne de commande d'actionneurs, raccordée à un circuit de vide.

Les véhicules automobiles, et les moteurs de véhicule automobile, utilisent une dépression pour commander différents actionneurs comme, par exemple, la vanne EGR, l'actionneur de répartiteur « swirl », la vanne « turbo », ou la soupape de réglage du système d'échappement bi mode.

La dépression est générée par une pompe à vide ou le moteur lui-même.

La dépression est acheminée aux différents actionneurs des organes mécaniques et/ou à l'amplificateur de freinage par l'intermédiaire d'un circuit dit « circuit de vide », constitué par des canalisations en matière plastique, en caoutchouc, ou en métal. Les électrovannes présentant des risques d'entrée d'eau lors, par exemple, d'essais véhicule, sont équipées d'une prise d'air moteur déportée ou Schnorkel matérialisé par un ensemble de tubes reliant le filtre à air au piquage de mise à l'air de l'électrovanne.

Ainsi, l'architecture d'un circuit de vide est constituée comme suit :
- un circuit de vide, dit primaire, pour la commande de l'assistance au freinage (circuit classé sécurité),
- un circuit de vide, dit secondaire, pour la commande des actionneurs,
- des circuits de mise à l'air déportés, et
- des électrovannes.

Les électrovannes possèdent au moins un piquage entrée, un piquage sortie et un piquage pour schnorkel.

Les piquages entrée et sortie ont des diamètres différents, de manière à éviter une inversion au montage. Par contre, étant donné la géométrie, il n'est pas possible d'avoir aujourd'hui une troisième valeur de diamètre, et cela, pour diverses raisons : d'une part, il est économique de recourir à des électrovannes standard utilisées dans plusieurs projets différents, et mises sur le marché par plusieurs constructeurs. D'autre part, cette troisième valeur de diamètre ne peut pas être plus petite pour une question de section de passage suffisante du fluide, ou plus grande en raison des exigences liées à l'environnement.

On a donc un piquage pour schnorkel sensiblement de même diamètre que le piquage de sortie.

Il arrive, en conséquence, relativement fréquemment, qu'il y ait inversion de montage entre ces deux piquages. On a pu observer une telle inversion sur environ deux cas sur cent en fabrication automobile d'un modèle actuel de véhicule.

Il y a donc une forte nécessité de trouver une solution technique au problème d'inversion au montage des canalisations d'électrovanne.

Dans un ensemble fluidique similaire, on a déjà cherché à réaliser un élément de raccordement du type générique sur lequel des moyens sont prévus pour éviter un montage des flexibles sur un piquage de raccord inadapté.

Ainsi, la demande de brevet d'invention français n° 2 878 933, au nom de la société ANDREAS STIHL AG & CO, décrit un élément de raccordement pour raccorder deux flexibles, qui comporte un premier ajutage de raccord pour raccorder un premier flexible et un deuxième ajutage de raccord pour raccorder un deuxième flexible. Le diamètre intérieur du premier flexible est inférieur au diamètre intérieur du deuxième flexible. Chaque ajutage de raccord comporte une extrémité libre à partir de laquelle un flexible peut être emboîté sur l'ajutage de raccord. Pour éviter une confusion des flexibles lors du montage sur l'élément de raccordement, on a prévu que le deuxième ajutage de raccord comporte un talon sur lequel le diamètre se rétrécit en direction de l'extrémité libre, d'un deuxième diamètre extérieur en un troisième diamètre extérieur, le deuxième diamètre extérieur étant supérieur et le troisième diamètre extérieur étant inférieur ou égal au diamètre intérieur du premier flexible. Le talon conçu sur le deuxième ajutage de raccord qui est le plus grand permet d'emboîter le flexible, de l'extrémité libre jusqu'au talon. En cas de montage erroné, le flexible avec un plus petit diamètre intérieur se heurte sur le talon. Ce n'est qu'avec de grandes difficultés que le flexible avec un plus petit diamètre intérieur peut être emboîté par-dessus le talon, ce qui permet à l'utili-sateur d'identifier le montage erroné et d'emboîter le flexible avec le plus faible diamètre intérieur sur l'autre ajutage de raccord qui est plus petit. Ce qui évite un montage erroné.

On connait de BE 651108 un système de raccord en matière plastique, destiné par exemple à des robinets, constitué d'un corps creux dont l'extrémité à relier à la source d'alimentation est repliée vers l'intérieur. On connait par ailleurs un raccord pour matelas gonflables que l'on peut positionner selon trois modes, correspondant à des alignements différents de différents passages de fluides.

Le but de la présente invention est de fournir un système de détrompage pour le raccordement d'une pluralité de canalisations sur un dispositif de commande de fluide, au moins deux canalisations présentant des diamètres internes sensiblement égaux et pouvant, par conséquent, être inversées au cours du montage. Plus particulièrement, le but de la présente invention est de fournir un système de détrompage physique qui empêche toute inversion de montage entre le piquage de sortie d'une électrovanne et le piquage pour schnorkel.

Un autre but de la présente invention est de fournir un tel système, qui soit un système de détrompage physique, de conception simple, de mise en oeuvre très facile, qui soit fiable et économique.

Pour parvenir à ces buts, la présente invention conçoit un nouveau système de détrompage pour le raccordement de canalisations sur un dispositif de commande de fluide, qui comporte un premier ajutage de raccord adapté pour le raccordement d'une première canalisation d'un premier diamètre intérieur, un deuxième ajutage de raccord adapté pour le raccordement d'une deuxième canalisation d'un deuxième diamètre intérieur différent du premier diamètre, et au moins un troisième ajutage de raccord adapté pour le raccordement d'une troisième canalisation sensiblement de même diamètre intérieur que la deuxième canalisation, lequel système de détrompage est constitué d'un manchon de connexion de la troisième canalisation avec une partie d'extrémité à raccorder qui a une section transversale extérieure élargie, l'augmentation de la section transversale extérieure étant telle qu'elle interdit de réaliser le raccordement de la troisième canalisation sur le deuxième ajutage de raccord.

La partie à section transversale élargie est, selon le mode de réalisation préféré de l'invention, une partie sensiblement cylindrique à diamètre extérieur augmenté, qui présente un rayon supérieur à la distance entre l'axe du deuxième ajutage de raccord et la surface extérieure ou périphérique du premier ajutage de raccord.

Dans un mode de réalisation préféré de l'invention également, le deuxième diamètre intérieur est supérieur au premier diamètre.

La partie à diamètre extérieur augmenté du manchon de connexion de la troisième canalisation est de longueur sensiblement égale ou inférieure à son diamètre extérieur.

Le dispositif de commande de fluide peut être une électrovanne pour la commande d'un actionneur dans un véhicule automobile, lequel actionneur est alimenté par au moins un circuit de vide.

La deuxième canalisation relie l'électrovanne à la commande dudit actionneur et la première canalisation relie l'électrovanne à une source de vide. La troisième canalisation relie l'électrovanne à un filtre à air déporté, par exemple.

L'électrovanne peut être utilisée pour la commande de l'actionneur de l'un des mécanismes suivants : vanne EGR, répartiteur « swirl », vanne turbo, système d'échappement bi mode, ou système doseur.

Les canalisations peuvent être en métal, en matière plastique ou en caoutchouc.

D'autres buts, avantages et caractéristiques de l'invention apparaîtront dans la description qui suit d'un mode de réalisation préféré, non limitatif de l'objet et de la portée de la présente demande de brevet, accompagnée de dessins dans lesquels :
- la figure 1 représente, de manière schématique, une électrovanne,
- la figure 2 représente l'électrovanne de la figure 1 avec les canalisations raccordées, de manière classique, sans système de détrompage selon la présente invention,
- la figure 3 représente la canalisation sur laquelle est prévu le système de détrompage selon la présente invention,
- la figure 4 représente l'électrovanne avec les canalisations raccordées, selon la présente invention, et
- la figure 5 représente l'électrovanne de la figure 4, dans lequel il y a raccordement erroné sur le deuxième ajutage de raccord.

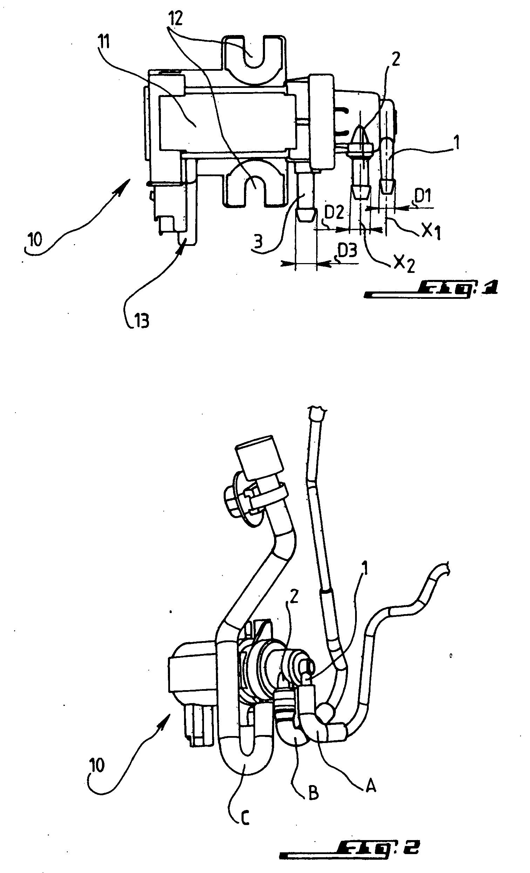

En référence au dessin de la figure 1, on a représenté une électrovanne, de référence générale 10, avec un corps principal de vanne 11, des embases de fixation 12, et un raccord de connectique 13. L'électrovanne 10 comporte au moins deux ajutages de raccord - ou piquages - qui sont les suivants :
- un premier ajutage de raccord 1, d'axe X₁, d'un premier diamètre D₁, pour le piquage entrée, qui permet de relier l'électrovanne 10, par exemple à une source de vide ou de dépression, non représentée,
- un deuxième ajutage de raccord 2, d'axe X₂, d'un deuxième diamètre D₂, pour le piquage sortie, qui permet de relier l'électrovanne à la commande d'un actionneur du véhicule ou du moteur précisé dans la suite du texte, et
- un troisième ajutage de raccord 3, d'un diamètre D₃ sensiblement égal au diamètre D₂ du deuxième ajutage de raccord, pour le piquage filtre à air déporté ou piquage pour « schnorkel » (prise d'air moteur rehaussée).

Les deux piquages, entrée 1 et sortie 2, de l'électrovanne ont des diamètres différents, de manière à éviter des inversions de montage des circuits. Par contre, comme déjà mentionné précédemment, il n'est pas possible d'avoir aujourd'hui une troisième valeur de diamètre.

Comme on peut le voir sur le dessin de la figure 2, des canalisations A, B et C, sont montées sur les ajutages de raccord 1, 2 et 3, respectivement, de l'électrovanne 10.

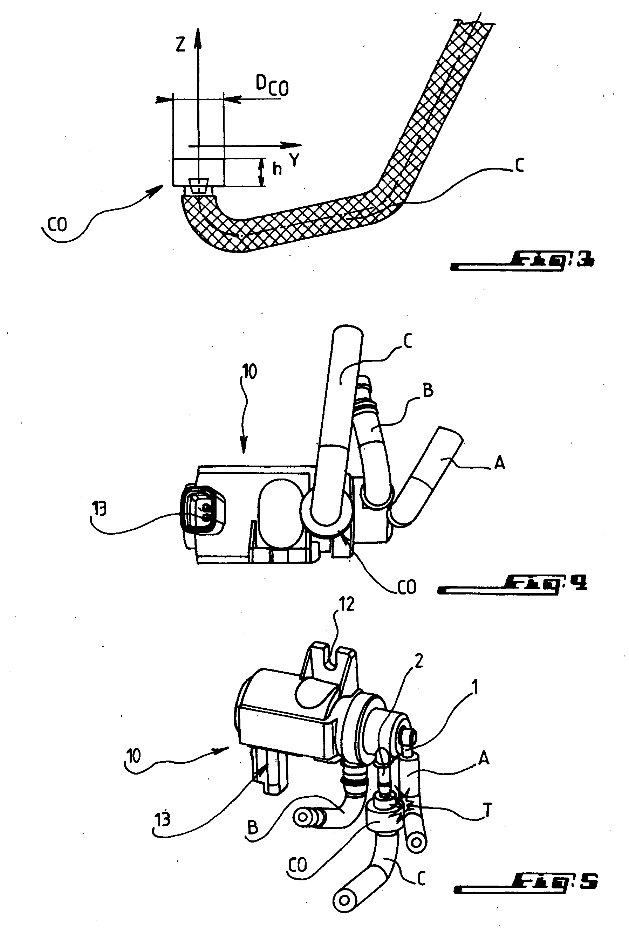

Pour éviter le problème d'inversion au montage entre le piquage sur l'ajutage de raccord 2 et le piquage sur l'ajutage de raccord 3, qui sont sensiblement de même diamètre (D₂ est sensiblement égal à D₃), la canalisation C de mise à l'air déporté présente une partie CO à diamètre extérieur augmenté D_{CO} autour de son manchon de connexion, par conséquent autour de sa partie d'extrémité (figure 3). Cette augmentation de diamètre extérieur est dimensionnée de telle façon qu'elle n'autorise le montage de la canalisation C de mise à l'air déporté que sur l'ajutage de raccord 3 prévu pour cette canalisation C.

De manière plus précise, en référence aux figures 3 à 5, la partie CO à diamètre extérieur D_{CO} augmenté de l'extrémité du manchon de connexion de la troisième canalisation C présente un rayon supérieur à la distance entre l'axe X₂ du deuxième ajutage de raccord 2 et la surface périphérique - ou surface extérieure - du premier ajutage de raccord 1.

Bien que l'on est décrit plus particulièrement un système de détrompage avec une partie élargie cylindrique sur le manchon de connexion, il est possible d'envisager des parties élargies non cylindriques, dans la mesure où les dimensions de la section transversale de ces parties non cylindriques n'autorisent pas le montage sur la sortie d'électrovanne.

Dans l'exemple décrit des figures 3 à 5, le deuxième diamètre intérieur D₂ est supérieur au premier diamètre D₁. De plus, la partie CO à diamètre extérieur D_{CO} augmenté du manchon de connexion de la troisième canalisation C est de longueur h sensiblement égale ou inférieure à son diamètre extérieur D_{CO}.

Comme représenté sur le dessin de la figure 5, une tentative de montage erronée de la canalisation C de mise à l'air sur l'ajutage de raccord 2 de sortie de l'électrovanne ne peut pas aboutir, parce qu'il y a interférence (référencée T sur la figure 5) avec la canalisation d'entrée A dans ce cas. On a donc, avec cette conception particulière du manchon d'extrémité de la canalisation C, réalisé un système de détrompage physique qui empêche un piquage erroné de la canalisation C sur l'ajutage de raccord 2 malgré la compatibilité des diamètres entre les canalisations B et C.

L'électrovanne 10 peut être l'électrovanne de l'un des mécanismes suivants d'actionneur du véhicule automobile ou du moteur du véhicule : vanne EGR, répartiteur « swirl », vanne turbo, système d'échappement bi mode, système de doseur.

Les canalisations A, B, C, peuvent être, par exemple, en métal, ou en matière plastique, ou en caoutchouc.

Bien entendu, la présente invention n'est pas limitée aux modes de réalisation décrits et représentés ci-dessus à titre d'exemples ; d'autres modes de réalisation peuvent être conçus par l'homme de métier sans sortir du cadre et de la portée de la présente invention.

## Revendications

1. Système de détrompage comportant des canalisations (A, B, C) raccordées sur un dispositif de commande de fluide (10), qui comporte un premier ajutage de raccord (1) adapté pour le raccordement d'une première canalisation (A) d'un premier diamètre intérieur (D₁), un deuxième ajutage de raccord (2) adapté pour le raccordement d'une deuxième canalisation (B) d'un deuxième diamètre intérieur (D₂) différent du premier diamètre (D₁), et au moins un troisième ajutage de raccord (3) adapté pour le raccordement d'une troisième canalisation (C) sensiblement de même diamètre intérieur (D₂) que la deuxième canalisation (B), **caractérisé en ce que** le manchon de connexion de la troisième canalisation (C) présente une partie d'extrémité à raccorder (CO) qui a une section transversale extérieure élargie, l'augmentation de ladite section transversale extérieure étant telle qu'elle interdit de réaliser le raccordement de la troisième canalisation sur le deuxième ajutage de raccord (2).

2. Système de détrompage selon la revendication 1, **caractérisé en ce que** ladite partie (CO) à section transversale élargie est une partie sensiblement cylindrique à diamètre extérieur augmenté (D_{CO}), qui présente un rayon supérieur à la distance entre l'axe (X₂) du deuxième ajutage de raccord (2) et la surface extérieure du premier ajutage de raccord (1).

3. Système de détrompage selon l'une quelconque des revendications 1 et 2, **caractérisé en ce que** le deuxième diamètre intérieur (D₂) est supérieur au premier diamètre (D₁).

4. Système de détrompage selon la revendication 3, **caractérisé en ce que** ladite partie (CO) à diamètre extérieur (D_{CO}) augmenté du manchon de connexion de la troisième canalisation (C) est de longueur (h) sensiblement égale ou inférieure à son diamètre extérieur (D_{CO}).

5. Système de détrompage selon l'une quelconque des revendication 1 à 4, **caractérisé en ce que** ledit dispositif de commande de fluide (10) est une électrovanne pour la commande d'un actionneur dans un véhicule automobile, lequel actionneur est alimenté par au moins un circuit de vide.

6. Système de détrompage selon la revendication 5, **caractérisé en ce que** la deuxième canalisation (B) relie l'électrovanne (10) à la commande dudit actionneur et la première canalisation (A) relie d'électrovanne (10) à une source de vide.

7. Système de détrompage selon l'une quelconque des revendications 5 et 6, **caractérisé en ce que** la troisième canalisation (C) relie l'électrovanne (10) à un filtre à air déporté.

8. Système de détrompage selon l'une quelconque des revendications 1 à 7, **caractérisé en ce que** l'électrovanne (10) est utilisée pour la commande de l'actionneur de l'un des mécanismes suivants : vanne EGR, répartiteur « swirl », vanne turbo, système d'échappement bi mode, ou système doseur.

9. Système de détrompage selon l'une quelconque des revendications 1 à 8, **caractérisé en ce que** les canalisations (A, B, C) sont en un matériau choisi parmi les matériaux suivants : métal, matières plastiques, caoutchouc.

## Claims

1. Polarizing system comprising pipes (A, B, C) connected to a fluid control device (10), which comprises a first coupling nozzle (1) suitable for connecting a first pipe (A) with a first internal diameter (D₁), a second coupling nozzle (2) suitable for connecting a second pipe (B) with a second internal diameter (D₂) different from the first diameter (D₁), and at least one third coupling nozzle (3) suitable for connecting a third pipe (C) with roughly the same internal diameter (D₂) as the second pipe (B), **characterized in that** the connecting sleeve of the third pipe (C) has an end portion to be coupled (CO) that has a wider external transversal section, the increase in said external transversal section being such that it prevents the third pipe from being coupled to the second coupling nozzle (2).

2. Polarizing system according to Claim 1, **characterized in that** said portion (CO) with widened transversal section is a substantially cylindrical portion with an increased external diameter (D_{CO}), which has radius greater than the distance between the axis (X₂) of the second coupling nozzle (2) and the external surface of the first coupling nozzle (1).

3. Polarizing system according to either of Claims 1 and 2, **characterized in that** the second internal diameter (D₂) is greater than the first diameter (D₁).

4. Polarizing system according to Claim 3, **characterized in that** said portion (CO) with increased external diameter (D_{CO}) of the connecting sleeve of the third pipe (C) has a length (h) substantially equal to or less than its external diameter (D_{CO}).

5. Polarizing system according to any one of Claims 1 to 4, **characterized in that** said fluid control device (10) is a solenoid valve for controlling an actuator in a motor vehicle, said actuator being powered by at least one vacuum circuit.

6. Polarizing system according to Claim 5, **characterized in that** the second pipe (B) links the solenoid valve (10) to the control of said actuator and at the first pipe (A) links the solenoid valve (10) to a vacuum source.

7. Polarizing system according to either of Claims 5 and 6, **characterized in that** the third pipe (C) links the solenoid valve (10) to a remote air filter.

8. Polarizing system according to any one of Claims 1 to 7, **characterized in that** the solenoid valve (10) is used to control the actuator of one of the following mechanisms: EGR valve, "swirl" distributor, turbo valve, bi-mode exhaust system, or sing system.

9. Polarizing system according to any one of Claims 1 to 8, **characterized in that** the pipes (A, B, C) are made of a material chosen from the following materials: metal, plastic materials, rubber.

## Patentansprüche

1. Unverwechselbarkeitssystem, das Rohrleitungen (A, B, C) aufweist, die an einer Vorrichtung (10) zur Steuerung von Fluid angeschlossen sind, welche einen ersten Verbindungsstutzen (1), der zum Anschluss einer ersten Rohrleitung (A) mit einem ersten Innendurchmesser (D₁) ausgeführt ist, einen zweiten Verbindungsstutzen (2), der zum Anschluss einer zweiten Rohrleitung (B) mit einem zweiten Innendurchmesser (D₂), der sich von dem ersten Innendurchmesser (D₁) unterscheidet, ausgeführt ist, und mindestens einen dritten Verbindungsstutzen (3), der zum Anschluss einer dritten Rohrleitung (C) mit im Wesentlichen dem gleichen Innendurchmesser (D₂) wie die zweite Rohrleitung (B) umfasst, **dadurch gekennzeichnet, dass** die Verbindungsmuffe der dritten Rohrleitung (C) einen zu verbindenden Endteil (CO) enthält, der einen erweiterten Außenquerschnitt aufweist, wobei die Vergrößerung des Außenquerschnitts so ist, dass sie einen Anschluss der dritten Rohrleitung an dem zweiten Anschlussstutzen (2) verhindert.

2. Unverwechselbarkeitssystem nach Anspruch 1, **dadurch gekennzeichnet, dass** der Teil (CO) mit erweitertem Querschnitt ein im Wesentlichen zylindrischer Teil mit einem vergrößerten Außendurchmesser (D_{CO}) ist, dessen Radius größer ist als der Abstand zwischen der Achse (X₂) des zweiten Anschlussstutzens (2) und der Außenfläche des ersten Anschlussstutzens (1).

3. Unverwechselbarkeitssystem nach einem der Ansprüche 1 und 2, **dadurch gekennzeichnet, dass** der zweite Innendurchmesser (D₂) größer ist als der erste Durchmesser (D₁).

4. Unverwechselbarkeitssystem nach Anspruch 3, **dadurch gekennzeichnet, dass** der Teil (CO) mit vergrößertem Außendurchmesser (D_{CO}) der Verbindungsmuffe der dritten Rohrleitung (C) eine Länge (h) aufweist, die im Wesentlichen gleich seinem Außendurchmesser (D_{CO}) oder kleiner als dieser ist.

5. Unverwechselbarkeitssystem nach einem der Ansprüche 1 bis 4, **dadurch gekennzeichnet, dass** die Vorrichtung (10) zur Steuerung von Fluid ein Magnetventil zur Steuerung eines Betätigungsglieds in einem Kraftfahrzeug ist, wobei das Betätigungsglied durch mindestens einen Vakuumkreis gespeist wird.

6. Unverwechselbarkeitssystem nach Anspruch 5, **dadurch gekennzeichnet, dass** die zweite Rohrleitung (B) das Magnetventil (10) mit der Steuerung des Betätigungsglieds verbindet und die erste Rohrleitung (A) das Magnetventil (10) mit einer Vakuumquelle verbindet.

7. Unverwechselbarkeitssystem nach einem der Ansprüche 5 und 6, **dadurch gekennzeichnet, dass** die dritte Rohrleitung (C) das Magnetventil (10) mit einem entfernten Luftfilter verbindet.

8. Unverwechselbarkeitssystem nach einem der Ansprüche 1 bis 7, **dadurch gekennzeichnet, dass** das Magnetventil (10) zur Steuerung des Betätigungsglieds eines der folgenden Mechanismen verwendet wird: Abgasrückführventil, Drallverteiler, Turboventil, Zweimodenauslasssystem oder Dosiersystem.

9. Unverwechselbarkeitssystem nach einem der Ansprüche 1 bis 8, **dadurch gekennzeichnet, dass** die Rohrleitungen (A, B, C) aus einem unter den folgenden Materialien ausgewählten Material hergestellt sind: Metall, Kunststoffmaterialen, Kautschuk.
